# DEMANDE DE BREVET EUROPEEN

(11) **EP 1 057 870 A1**
(43) Date de publication de la demande: **06.12.2000**
(21) Numéro de dépôt: 00401404.9
(22) Date de dépôt: 22.05.2000
(51) Int. Cl.: C08L 77/00, C08L 77/02, C08L 77/06, B32B 27/32, C08J 5/18

(54) **Compositions à base de polyoléfine et de polyamide à bas point de fusion**

(30) Priorité: 02.06.1999 FR 9906934
(71) Demandeur: Atofina, 92800 Puteaux (FR)
(72) Inventeur: Alex, Patrick, 91470 Limours Pecqueuse (FR); Blondel, Philippe, 27300 Bernay (FR); Flat, Jean-Jacques, 27470 Serquigny (FR); Reignier, Gérard, 27470 Fontaine l'Abbe (FR)
(74) Mandataire: Neel, Henry

(57) **Abrégé**

L'invention concerne des compositions à matrice polyamide (A) et phase dispersée (B) de polyoléfine dans lesquelles le polyamide a une température de fusion inférieure à celle du PA 6 et la phase dispersée est constituée d'au moins une polyoléfine (B) choisie parmi les polyoléfines fonctionnalisées (B1) et les polyoléfines non fonctionnalisées (B2). Avantageusement (A) est le PA 6/12 ou le PA 6/6-6. Ces compositions sont utiles pour faire des films mono ou multicouches par coextrusion avec de l' EVA ou du PE.

## Description

### [Domaine de l'invention]

La présente invention concerne des compositions à base de polyoléfine et de polyamide à bas point de fusion et plus particulièrement des compositions à matrice polyamide et comprenant une phase dispersée en polyoléfine. Elles sont constituées par exemple de PA 6/6-6, de polyéthylène ou de polypropylène et le plus souvent d'un compatibilisant qui est par exemple une polyoléfine fonctionnalisée. Ces compositions sont utiles pour mouler des objets ou pour faire des films utilisés par exemple dans l'emballage.

### [Le problème à résoudre]

Les compositions à base de PA 6 et de polyoléfine, connues par ailleurs comme d'excellents matériaux barrière (CH₃Br, styrène, pentane, ...), possèdent des températures de mise en oeuvre, par extrusion de gaine par exemple, de l'ordre de 260°C. Ces températures ne sont pas compatibles avec des structures co-extrudées où l'une au moins des couches présente une certaine sensibilité thermique telle qu'une couche en copolymères de l'éthylène et de l'acétate de vinyle (EVA). De plus ces températures élevées engendrent des contraintes de mis en oeuvre pour des structures co-extrudées en présence de couches en PE (polyéthylène).

Par ailleurs, les films constitués de ces compositions à base de PA 6 et de PE présentent des résistances à la déchirure faibles dans le sens longitudinal. L'invention propose par conséquent de nouveaux films barrière possédant des résistances à la déchirure améliorées obtenus dans le cadre d'une construction mono- ou multicouche contenant au moins une couche d'un alliage de type Polyamide à bas point de fusion / polyoléfine qui peut se mettre en oeuvre, en co-extrusion de gaine, à des températures suffisamment basses pour qu'elles soient compatibles avec des couches de polymères thermosensibles.

### [L'art antérieur]

L'art antérieur n'a pas décrit ce problème technique. Le brevet EP 766 913 décrit un film constitué d'un mélange comprenant au moins un polyamide et au moins une polyoléfine le dit film étant disposé sur un sol agricole dans lequel on injecte un fumigeant. Le traitement des sols par fumigation consiste à injecter des gaz dans le sol, avant les semences ou les plantations, pour désinfecter la terre puis on recouvre le sol avec un film d'une matière plastique pour retenir ces gaz dans le sol et ainsi les laisser agir. On peut utiliser par exemple le bromure de méthyle, le 1,3-dichloropropène, le chlorure de méthyle, le 3.5-diméthyltétrahydro-1.3.5-thiadiazin-2-thion, le tétra thiocarbonate de sodium ou le métham-sodium (CH₃NHCS.S Nₐ).

Selon une première variante, cet art antérieur concerne aussi un film comprenant la couche précédente et une couche constituée essentiellement d'une polyoléfine. Selon une deuxième variante, cet art antérieur concerne aussi un film comprenant la couche précédente disposée entre deux couches de polyoléfine. Le problème technique de la présente invention n'est pas évoqué, le polyamide utilisé est toujours le PA 6

Le brevet EP 807 519 concerne un film multicouche, utile pour faire des poches souples comprenant (i) un film barrière à base d'un mélange de polyamide et de polyoléfine et (ii) sur au moins l'une de ses faces un film à base d'un copolymère de l'éthylène et d'un ester insaturé soudable par haute fréquence. Elle est utile pour faire des poches souples de détergents, d'eau de javel ou d'adoucissants pour les textiles. Les exemples décrivent des films barrière constitués de PA 6 et de polyéthylène et des films soudables en EVA. Comme pour l'art antérieur précédent le problème technique de la présente invention n'est pas évoqué, le polyamide utilisé est toujours le PA 6.

### [Brève description de l'invention]

On a maintenant trouvé qu'on pouvait produire des compositions à base de polyoléfine et de polyamide à bas point de fusion, qu'on pouvait les transformer en films et qu'on pouvait les coextruder avec d'autres polymères pour faire des structures multicouches.

L'invention concerne donc des compositions à matrice polyamide (A) et phase dispersée (B) de polyoléfine dans lesquelles le polyamide a une température de fusion inférieure à celle du PA 6 et la phase dispersée est constituée d'au moins une polyoléfine (B) choisie parmi les polyoléfines fonctionnalisées (B1) et les polyoléfines non fonctionnalisées (B2).

La présente invention concerne aussi les films constitués des compositions précédentes.

Les films de la présente invention ont de nombreux avantages : ils se mettent en oeuvre à basse température, ils résistent à la déchirure et ils ont un caractère barrière.

Les films de l'invention peuvent se mettre en oeuvre avantageusement à plus basse température par rapport à des alliages de l'art antérieur à base de PA 6 (température de fusion=223°C) dont la mise en oeuvre en coextrusion de gaine se fait habituellement à 260°C. Un gain d'au moins 20 à 30°C est attendu. Cette caractéristique présente un intérêt tout particulier dans le domaine de la coextrusion de films multicouches où les couches extérieures sont constituées de PE (meilleure tenue de bulle à cause de la viscosité plus élevée des couches PE) ou de copolymères thermosensibles d'éthylène et de monomères polaires (par exemple EVA). On limite ainsi la dégradation thermique des couches externes.

Les films mono et multicouches contenant au moins une couche selon la présente invention présentent des résistances à la déchirure améliorées dans le sens longitudinal par rapport aux constructions connues de l'homme de l'Art comme celles décrites dans EP 766 913. Par rapport à des films à base de PE, les films selon la présente invention possèdent des perméabilités réduites vis à vis des agents suivants : CH₃Br, O₂, CO₂.

### [Description détaillée de l'invention]

Par « Polyamide à bas point de fusion », on entend tout polyamide dont le point de fusion est inférieur à 220°C, Il s'agit le plus souvent de copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-(CH₂)₁₀-COOH.

La diamine peut être une diamine aliphatique ayant de 6 à 12 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

Par « Polyamide à bas point de fusion », on entend également tout polyamide amorphe sans point de fusion.

A titre d'exemples de polyamides (A), on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

Avantageusement (A) est choisi parmi le PA 6 / 12 et le PA 6 / 6-6.

Une polyoléfine non fonctionnalisée (B2) est classiquement un homo polymère ou copolymère d'alpha oléfines ou de dioléfines, telles que par exemple, éthylène, propylène, butène-1, octène-1, butadiène.
A titre d'exemple, on peut citer :
- les homo polymères tels que polyéthylène, en particulier LDPE, HDPE, LLDPE ou VLDPE, polyéthylène métallocène ou polypropylène.
- les copolymères éthylène/alpha-oléfine tels qu'éthylène/propylène, les EPR.
- les copolymères blocs styrène/éthylène-butène/styrène (SEBS), styrène/butadiène/styrène (SBS), styrène/isoprène/ styrène (SIS), styrène/éthylène-propylène/styrène (SEPS) et éthylène/propylène/diène (EPDM).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier entre de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères .

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PE de haute densité, PE de moyenne densité, PE basse densité linéaire, PE basse densité, PE de très basse densité. Ces polymères sont connus par l'Homme de l'Art comme étant produits selon un procédé « radicalaire », selon une catalyse de type « Ziegler» ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique.

Le MFI de (A) , les MFI de (B1) et (B2) peuvent être choisis dans une large plage il est cependant recommandé pour faciliter la dispersion de (B) dans la matrice (A) que le MFI de (A) soit plus grand que celui de (B).

La proportion de (A) est avantageusement de 50 à 90 parties (en poids) pour 50 à 10 parties de (B). Pour de faibles proportions de (B), par exemple 10 à 15 parties, il est suffisant d'utiliser une polyoléfine (B2) non fonctionnalisée. La proportion de (B2) et (B1) dans la phase dispersée (B) dépend de la quantité de fonctions présentes dans (B1) ainsi que de leur réactivité. Avantageusement on utilise 5 à 15 parties de (B1) pour respectivement 30 à 20 parties de (B2).

Les compositions selon l'invention peuvent renfermer en outre au moins un additif choisi parmi :
- les charges (minérales, anti-feu...),
- les fibres
- les colorants ;
- les pigments ;
- les azurants ;
- les anti-oxydants ;
- les stabilisateurs UV.

Les compositions de l'invention sont fabriquées par mélange à l'état fondu des constituants (A) et (B) selon les techniques habituelles des thermoplastiques. On peut utiliser des mélangeurs, des extrudeuses ou des malaxeurs. Les films sont fabriqués soit par extrusion soufflage de gaine soit par extrusion cast.

La présente invention concerne aussi des structures multicouches comprenant le film précédent et au moins un film d'un polymère thermosensible. Ce dernier polymère peut être par exemple un EVA, un copolymère éthylène / (meth)acrylate d'alkyle ou un polyéthylène. Ces structures sont fabriquées par coextrusion soufflage de gaine ou cast.

Les films de l'invention, mono ou multicouches, sont utiles pour l'emballage ; pour le conditionnement des polyesters à reticuler selon la technologie SMC telle que décrite dans EP 786 319 ; pour la fumigation tel que décrit dans EP 766 913 ; pour le conditionnement de detergents, d'eau de javel ou d'adoucissants pour les textiles tels que décrits dans EP 807 519 et pour l'emballage des billes de polystyrène expansible tel que décrit dans EP 907508.

### [Exemples]

On a utilisé les produits suivants :
**Polyamides (A)**
PA 1 : Copolyamide 6/6-6 de viscosité moyenne possédant une température de fusion de 196°C et un indice de fluidité de 4.4 g/10 min selon ASTM 1238 à 235°C sous un poids de 1kg.
PA 2 : Copolyamide 6/6-6 de viscosité moyenne possédant une température de fusion de 196°C et un indice de fluidité de 6.6 g/10 min selon ASTM 1238 à 235°C sous un poids de 1kg.
**Polyamide de l'art antérieur**
PA 3 : Polyamide 6 possédant une température de fusion de 223°C et un indice de fluidité de 130 g/10 min selon ASTM 1238 à 275°C sous un poids de 5kg.
   **Polyoléfines (B2)**
PEbdl : Polyéthylène de basse densité linéaire possédant une densité de 0.920 kg/l selon ISO1872/1 et un indice de fluidité de 1 g/10 min selon ASTM 1238 à 190°C sous un poids de 2.16kg.
PEhd : Polyéthylène de haute densité possédant une densité de 0.952 kg/l selon ISO1872/1 et un indice de fluidité de 0.4 g/10 min selon ASTM 1238 à 190°C sous un poids de 2.16kg.
**Polyoléfines (B1)**
Liant 1 : Il s'agit d'un PE porteur d'un taux de 3000 ppm d'anhydride maléique et possédant un indice de fluidité de 1 g/10 min selon ASTM 1238 à 190°C sous un poids de 2.16kg.
Liant 2 : Il s'agit d'un ter polymère d'éthylène, d'ester acrylique (1) et d'anhydride maléique (2) possédant un taux de comonomères (1+2) de 32% et un indice de fluidité de 7g/10 min selon ASTM 1238 à 190°C sous un poids de 2.16kg.
**Antioxydants**
Anti 1 : Antioxydant de type phénolique encombré.
Anti 2 : Antioxydant secondaire de type phosphite.

### Préparation des compositions de l'invention et des exemples comparatifs.

Dans la trémie d'une extrudeuse double vis corotative Werner Pfleiderer de diamètre 40 mm, L/D = 40 (9 fourreaux + 4 entretoises soit une longueur totale de 10 fourreaux), on introduit par l'intermédiaire de trois doseurs pondéraux indépendants (ou par simple pré-mélange à sec des différents granulés) le copolyamide à bas point de fusion, la polyoléfine et la polyoléfine fonctionnelle. Le débit total de l'extrudeuse est de 50 kg/h et la vitesse de rotation des vis est de 150 t/min les températures matière au niveau des fourreaux 3/4, 6/7, 7/8 et en sortie de filière sont respectivement de 245, 263, 265 et 276°C. Les joncs extrudés sont granulés puis étuvés sous vide pendant 8 heures à 80°C.

### Caractérisation des mélanges de polymères

Les indices de fluidité des compositions ont été mesurés selon ASTM 1238 à 235°C sous un poids de 2.16kg.

### Mise en oeuvre des films

Les compositions de polymères ont été mises en oeuvre en extrusion de gaine **monocouche** sur une extrudeuse type Kaufman PKH 20-65 possédant une vis de type PE EVA avec élément mélangeur de type Maddock, un diamètre de 63.5 mm, un rapport L/D de 28. Des films de 500 mm de largeur et 25 micromètres d'épaisseur ont été produits.

Les compositions de polymères ont été mises en oeuvre en extrusion de gaine **tricouche** sur une extrudeuse type KIEFEL munie d'une filière annulaire de 150 mm de diamètre, d'un anneau de refroidissement à double flux, d'un entrefer réglé à 1.2 mm et selon un taux de gonflage de 3.

### Caractérisation des films

Les films ont été caractérisés en résistance à la traction dans les sens de l'extrusion et dans le sens perpendiculaire à l'extrusion selon la nome ISO 527 pour une vitesse de traction de 500 mm/min, en résistance à la déchirure dans les sens de l'extrusion et dans le sens perpendiculaire à l'extrusion selon la norme NFT 64-141 :84 et selon la méthode du Dart Test (méthode A).

### Compositions réalisées

| **produits** | **Ex.1** | **Ex.2** | **Ex.3** | **Ex.4** | **CEx.1** |
|---|---|---|---|---|---|
| PA1 | 64.3 | 64.3 | | | |
| PA2 | | | 64.3 | 64.3 | |
| PA3 | | | | | 64.3 |
| Pebdl | 27 | | 27 | | 25 |
| Pehd | | 27 | | 27 | |
| Liant 1 | 8 | 8 | 8 | 8 | |
| Liant 2 | | | | | 10 |
| Anti 1 | 0.5 | 0.5 | 0.5 | 0.5 | 0.5 |
| Anti 2 | 0.2 | 0.2 | 0.2 | 0.2 | 0.2 |

Les exemples E1 à E4 sont conformes à l'invention ; CE1 est un contre exemple

### Indices de Fluidité des compositions préparées

| | E1 | E2 | E3 | E4 | CE1 |
|---|---|---|---|---|---|
| MFI | 1.7 | 0.7 | 2.6 | 0.7 | 2 |

### Mise en oeuvre des compositions par extrusion monocouche de gaines

La composition de l'Ex1 a été mise en oeuvre en extrusion de gaine monocouche comparativement à CEx1. La comparaison des conditions d'extrusion met en évidence une diminution d'environ 20°C des températures matière en faveur d'Ex1 comme le montre le tableau ci-dessous :

| | Température cylindre | | | | Température filière | | | | |
|---|---|---|---|---|---|---|---|---|---|
| Zone | Z1 | Z2 | Z3 | Z4 | Adapt. | F1 | F2 | F3 | Matière |
| Ex1 | 200 | 215 | 215 | 220 | 220 | 220 | 220 | 220 | 240 |
| CEx1 | 230 | 235 | 240 | 250 | 240 | 240 | 240 | 240 | 262 |

### Déchirure

Les résistances à la déchirure dans le sens longitudinal selon la norme NFT 64-141 :84 ont été mesurées sur des films monocouche après un conditionnement de 8 jours à 23°C et 50% HR. Les valeurs enregistrées rassemblées dans le tableau ci-dessous mettent en évidence une amélioration de la résistance à la déchirure pour les films selon l'invention par rapport au contre exemple.

| Référence | E1 | E2 | CE1 |
|---|---|---|---|
| Déchirure (cN) | 71 | 74 | 12 |

Les résistances à la déchirure dans le sens longitudinal selon la norme NFT 64-141 :84 ont été mesurées sur des films tricouche après un conditionnement de 8 jours à 23°C et 50% HR. Les compositions des films tri couches sont précisées ci-dessous :
F1 : Exceed ECD103 + 10% Orevac R // Ex 1 // Lacqtène 1003FE23 + 10% Orevac R (11/10/11 µm)
F2 : Exceed ECD103 + 10% Orevac R // Ex 2 // Lacqtène 1003FE23 + 10% Orevac R (11/10/11 µm)
F3 : Exceed ECD103 + 10% Orevac R // Ex 3 // Lacqtène 1003FE23 + 10% Orevac R (11/10/11 µm)
F4 : Exceed ECD103 + 10% Orevac R // Ex 4 // Lacqtène 1003FE23 + 10% Orevac R (11/10/11 µm)
CF5 : Exceed ECD103 + 10% Orevac R // CEx 1 // Lacqtène 1003FE23 + 10% Orevac R (11/10/11 µm)

F1 à F4 sont conformes à l'invention, CF5 est un exemple comparatif. Dans ces films on a utilisé les produits suivants :
Exceed ECD103 est un copolymère de l'éthylène obtenu par catalyse métallocène de densité 0,917 selon ISO 1872 /1 et de MFI 1 selon ASTM D1238
Orevac® R est un polyéthylène greffé par l'anhydride maléique (il en contient 0,3 % en poids), sa densité est 0,920 et le MFI 1 à 190°C sous 2,16 kg. On a ajouté 10 % en poids de ce produit dans l' Exceed ECD103 et dans le Lacqtène 1003FE23.
Lacqtène 1003FE23 est un polyéthylène basse densité radicalaire (LDPE aussi désigné PEbd) de densité 0,923 selon ISO 1872 /1 et MFI 0,3 à 190°C sous 2,16 kg, selon ASTM D 1238.
   "11/10/11" désigne les épaisseurs des couches en µm.

| Référence | F1 | F2 | F3 | F4 | CF5 |
|---|---|---|---|---|---|
| Déchirure (cN) | 67 | 62 | 66 | 56 | 18 |

### Perméabilité

Les perméabilités des films monocouches ont été mesurées selon la norme NFT 54-195. Les valeurs obtenues pour les films selon l'invention permettent de les classer dans les produits barrière. Les tableaux ci-dessous permettent de le comparer à des polyoléfines.

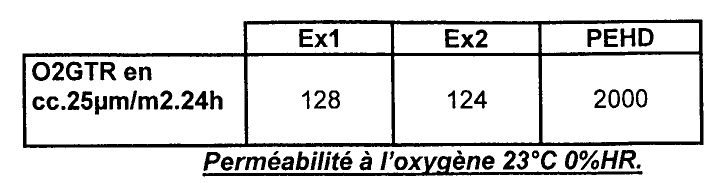

" HR" signifie l'humidité relative.

"O2GTR" désigne la perméabilité à l'oxygène des films mesurée selon ASTM D 3985 et s'exprime en cm³ d'oxygène par m² pour 24 heures pour une différence de pression de 1 bar et une épaisseur de 25 µm. O₂GTR varie proportionnellement avec l'inverse de l'épaisseur du film.

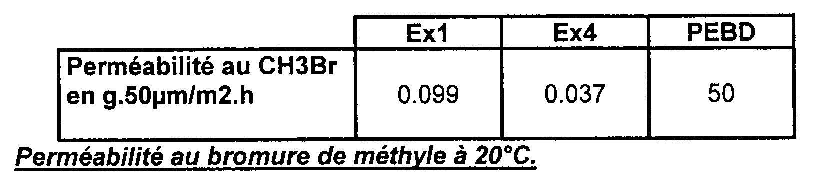

## Revendications

1. Compositions à matrice polyamide (A) et phase dispersée (B) de polyoléfine dans lesquelles le polyamide a une température de fusion inférieure à celle du PA 6 et la phase dispersée est constituée d'au moins une polyoléfine (B) choisie parmi les polyoléfines fonctionnalisées (B1) et les polyoléfines non fonctionnalisées (B2).

2. Compositions selon la revendication 1 dans lesquelles le polyamide (A) est un copolyamide résultant de la condensation d'au moins deux acides alpha oméga aminocarboxyliques ou de deux lactames ou d'un lactame et d'un acide alpha oméga aminocarboxylique et est avantageusement le PA 6/12.

3. Compositions selon la revendication 1 dans lesquelles le polyamide (A) résulte de la condensation d'au moins un acide alpha oméga aminocarboxylique (ou un lactame), au moins une diamine et au moins un acide dicarboxylique et est avantageusement le PA 6 / 6-6.

4. Compositions selon l'une quelconque des revendications précédentes dans lesquelles les polyoléfines (B2) non fonctionnalisées sont choisies parmi tout homo polymère de l'éthylène ou copolymère de l'éthylène et d'un comonomère de type alpha oléfinique supérieur tel que le butène, l'hexène, l'octène ou le 4-méthyl 1-Pentène.

5. Compositions selon l'une quelconque des revendications précédentes dans lesquelles les polyoléfines (B1) fonctionnalisées sont choisies parmi tout polymère comprenant des motifs alpha oléfiniques et des motifs porteurs de fonctions réactives polaires comme les fonctions époxy, acide carboxylique ou anhydride d'acide carboxylique.

6. Compositions selon la revendication 5 dans laquelle (B1) est choisi parmi les ter polymères de l'éthylène, d'acrylate d'alkyle et d'anhydride maléique ou de méthacrylate de glycidyle; les polyoléfines greffées par de l'anhydride maléique ainsi que des ter polymères de l'éthylène, d'acrylate d'alkyle et d'acide (meth) acrylique.

7. Compositions selon l'une quelconque des revendications précédentes dans lesquelles la proportion de (A) est avantageusement de 50 à 90 parties (en poids) pour 50 à 10 parties de (B).

8. Compositions selon la revendication 7 dans lesquelles on utilise 5 à 15 parties de (B1) pour respectivement 30 à 20 parties de (B2).

9. Films constitués des compositions selon l'une quelconque des revendications précédentes.

10. Structures multicouches comprenant le film de la revendication 9 et au moins un film d'un polymère thermosensible.

11. Structures multicouches selon la revendication 10 dans lesquelles le polymère thermosensible est choisi parmi les EVA, les copolymères éthylène / (meth)acrylate d'alkyle ou les polyéthylènes.
